# EUROPEAN PATENT SPECIFICATION

(11) **EP 2 695 429 B1**
(45) Date of publication and mention of the grant of the patent: **01.05.2019**
(21) Application number: 11863228.0
(22) Date of filing: 08.11.2011
(51) Int. Cl.: H04W 36/08, H04W 36/36, H04W 36/00, H04W 72/04, H04W 74/08

(54) **HANDOVER IN CARRIER AGGREGATION SCENARIOS**
ÜBERGABE IN TRÄGERAGGREGATIONSSZENARIEN
TRANSFERT INTERCELLULAIRE DANS DES SCÉNARIOS À AGRÉGATION DE PORTEUSES

(30) Priority: 02.04.2011 CN 201110089934
(43) Date of publication of application: 12.02.2014
(73) Proprietor: Alcatel Lucent, 91620 Nozay (FR)
(72) Inventor: YANG, Tao, Shanghai 2012206 (CN); LIM, Seau Sian, Swindon Westlea WI SN5 7DJ (GB)
(74) Representative: Novagraaf Technologies
(86) International application number: PCT/IB2011/003216
(87) International publication number: WO 2012/137034

(56) References cited:
- WO-A1-2010/094235
- WO-A1-2011/018033
- CN-A- 102 123 516
- US-A1- 2010 120 431
- HUAWEI: "Intra LTE-A UE Handover Procedure inter-eNB for CA", 3GPP DRAFT; R2-095814 INTRA LTE-A UE HANDOVER PROCEDURE INTER-ENB FOR CA, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390298, [retrieved on 2009-10-06]
- HUAWEI: "Multiple Timing Advance Impact on RAN2", 3GPP DRAFT; R2-100110 MULTIPLE TIMING ADVANCE IMPACT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Valencia, Spain; 20100118, 12 January 2010 (2010-01-12), XP050420934, [retrieved on 2010-01-12]
- SAMSUNG: "Handover with CA- stage 2 level issues", 3GPP DRAFT; R2-103113 HANDOVER WITH CA - HIGH LEVEL ISSUES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Montreal, Canada; 20100510 - 20100514, 3 May 2010 (2010-05-03), XP050605127, [retrieved on 2010-05-03]
- HUAWEI: "Different Timing Advance Impact on Carrier Aggregation", 3GPP DRAFT; R2-095815 DIFFERENT TIMING ADVANCE IMPACT ON CARRIER AGGREGATION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Miyazaki; 20091012, 12 October 2009 (2009-10-12), XP050390299, [retrieved on 2009-10-06]

## Description

### Field of the Invention

The present invention relates to mobile communication technologies, more specifically, relates to user handover technologies for carrier aggregation scenarios.

### Background of the Invention

In LTE-A, a higher bandwidth is used to meet the requirement of a higher data transfer rate, and the maximum bandwidth can reach 100 MHz. In order to be backward compatible, the 100 MHz bandwidth is divided into multiple carrier components, and each carrier component can have a maximum of 20 MHz bandwidth. Therefore, each user can support a maximum of 5 carrier components. For each user equipment, there is a primary carrier component (PCC) and optionally a plurality of secondary carrier components (SCC), where the primary carrier component always remains active. Another related concept is Pcell and Scell that are already adopted by 3GPP, where a Pcell means a downlink/uplink primary carrier component pair, and a Scell means a downlink/uplink secondary carrier component pair or a single downlink carrier. A Pcell is established by a R8 radio resource control connection program, while a Scell is created by a new R10 Scell adding message.

In Release 10 (R10) of LTE-A protocol released, a user equipment performs a random access procedure only on a Pcell. For a handover procedure of R10, a target eNB indicates both a Pcell and a Scell in a handover command (HO command), but a user equipment performs a random access procedure on the indicated Pcell only. If the random access on the Pcell is successful, the handover is regarded as succeeding; if the random access on the Pcell fails, the handover is regarded as failing.

3GPP TSG RAN WG2 Meeting #67b1s R2-095814; Miyazaki, Japan, Oct 12th - Oct 16th 2009 Title: Intra LTE-A UE Handover Procedure inter-eNB tor CA; Source: Huawei; discusses the necessary support for intra LTE-A UE handover procedure between eNBs for CA. The discussion will mainly focus on differences from the LTE Re18 handover procedure. Finally, the corresponding text proposal for 36.912 is given.

3GPP TSG RAN WG2 Meeting #68bis; Valencia, SP, Jan 18 - Jan 22, 2010 Agenda Item: 7.1 .1; R2-1001 1 0; Source: Huawei; Title: Multiple Timing Advance Impact on RAN2 analyzes the impact of supporting multiple TA.

### Summary of the Invention

Due to the existence of remote radio frequency head (RRH) and frequency selective repeater, signals of Pcell and each Scells may pass through different transmission paths, and therefore, different timing advances (TA) are required. It has been commonly agreed in RAN51 that it is necessary to support multiple timing advances.

For R10, random access procedures of user equipments are limited onto Pcell. For handover procedures of R10, user equipments perform random accesses on Pcell only. In order to realize timing alignment in carrier aggregation (CA) scenarios, it is necessary to support multiple timing advances, and the scheme in R10 is insufficient to meet such requirement.

As a result, an object of the present invention is to provide methods and apparatuses for handover in carrier aggregation scenarios, so as to meet the aforementioned requirement.

As a result, an object of the present invention is to provide methods and apparatuses for handover in carrier aggregation scenarios, so as to meet the aforementioned requirement. This is achieved by a method of handover performed in a base station according to independent claim 1, a method of handover in a user equipment according to independent claim 4, a first handover apparatus for handover in a base station according to independent claim 10 and a second handover apparatus for handover in a user equipment according to independent claim 11. Advantageous embodiments are described in the dependent claims.

By means of the methods and apparatuses provided in the present invention, Pcell and Scells requiring different timing advances in carrier aggregation scenarios can be supported. Furthermore, in some embodiments of the present invention, by means of supporting changing the Pcell in the base station, the success rate of handovers is effectively improved in carrier aggregation scenarios, so as to avoid unnecessary connection reestablishment procedures.

### Brief Description of Drawings

Other features, objectives and advantages of the present invention will become more apparent from the following detailed description of the non-limiting embodiments taken in conjunction with the accompanying drawings:
Fig. 1 illustrates a schematic diagram of an exmplary handover scenario in a mobile communication system;
Fig. 2 illustrates a flowchart of a method for handover in a mobile communication system according to an embodiment of the present invention;
Fig. 3 illustrates a block diagram of a first handover apparatus for handover in base stations according to an embodiment of the present invention;
Fig. 4 illustrates a block diagram of a second handover apparatus for handover in user equipments according to an embodiment of the present invention;

In the figures, throughout different views, the identical or similar reference marks indicate the corresponding characteristics.

### Detailed Description of Embodiments

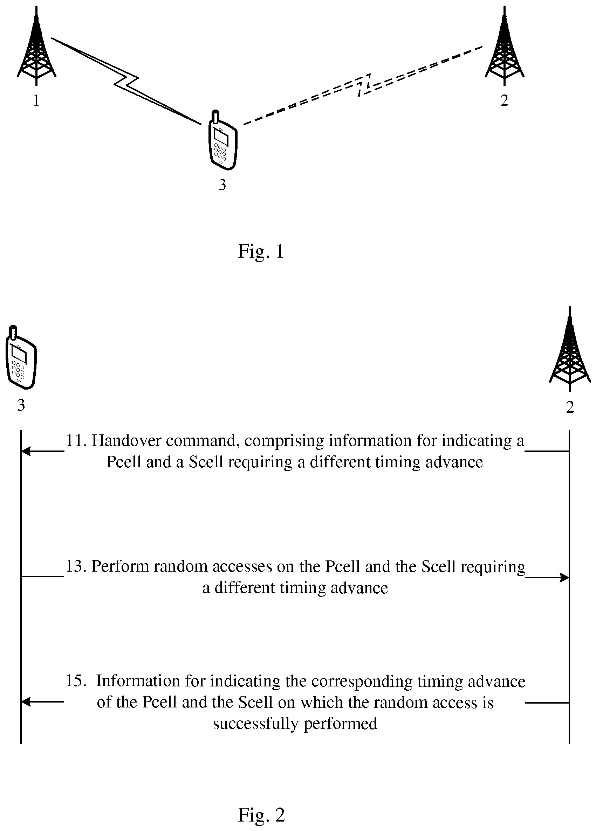

Fig. 1 illustrates a schematic diagram of an exemplary handover scenario in a mobile communication system. As shown in the figure, user equipment 3 will perform a handover operation, and base station 1 is the original serving base station of user equipment 3, while base station 2 is the target base station for user equipment 3 to perform the handover. Base station can be also called site, and those skilled in the art should understand that, base station has different special names corresponding to different protocol standards. For example, in a LTE system or a LTE-A system, base station is also called Node B or evolved node B (eNB). Base station or site called in the present application is for example the evolved node B in LTE-A system but is not limited thereto.

Fig. 2 illustrates a flowchart of a method for a handover in a mobile communication system according to an embodiment of the present invention. The method is usually performed between a user equipment and its target base station, and comprises three steps 11, 13 and 15. In the following, the method is described in detail according to Fig. 2 and in conjunction with user equipment 3, its base station 2 shown in Fig. 1.

In step 11, base station 2 sends a handover command to user equipment 3, wherein the handover command includes information for indicating a Pcell and a Scell requiring a timing advance different from said Pcell.

Generally, a handover command includes information indicating a Pcell and Scells. Because the Pcell and each Scell may be mapped to different remote radio frequency heads, frequency selective repeaters or other devices, modules, the signals of the Pcell and each Scell may experience different transmission paths, and therefore, different timing advances are required to achieve timing adjustment. Base station 2 can determine which Scell(s) requires a timing advance different from the Pcell according to its configuration. Thus, in the handover command, besides the Pcell and each Scell, it is also indicated which Scell(s) requires a timing advance different from the Pcell.

User equipment 3 will receive a handover command from base station 2, and then, in step 13, user equipment 3 performs random accesses on the Pcell and the Scell(s) requiring a timing advance different from the Pcell indicated by the handover command.

Optionally, in step 13, user equipment 3 performs random accesses in parallel on the Pcell and the Scell(s) requiring a timing advance different from the Pcell. In this way, it can speed up the completion of the random access procedure.

Or, optionally, in step 13, user equipment 3 performs random accesses on a Pcell and Scell(s) requiring a timing advance different from the Pcell successively, wherein the random access is firstly performed on the Pcell.

The advantage of performing step 13 in two ways lies in that, Scell initialization uplink synchronization is achieved in the handover procedure. Thus, after the handover, all Scells on which the random access is successfully performed are in a state of being well configured but inactive, which is consistent with the corresponding rules in LTE-A R10. Therefore, it is not necessary to initiate an uplink synchronization procedure after the handover, unless there exists a Pcell or a Scell that fails in the random access of the handover procedure. For the Pcell or Scell that fails in the random access, user equipment 3 can perform a random access again after receiving a physical downlink control channel (PDCCH) order signaling from base station 2, or perform a random access again automatically.

After a random access is performed successfully on any carrier component (pair), base station 2 determines the corresponding timing advance; then, in step 15, base station 2 will send information for indicating the corresponding timing advance to user equipment 3, according to the successful random accesses of user equipment 3 on the Pcell and the Scell requiring a timing advance different from the Pcell indicated by the handover command. In the other words, base station 2 will indicate the corresponding timing advance of every Pcell or Scell with a successful random access to user equipment 3.

In LTE-A R10, because a random access is performed on a Pcell only, the end of the random access procedure on the Pcell also means the end of a handover. However, in the technical solution proposed by the present invention, the end of a handover can be defined as by the following two definitions:
The first definition (of the end of a handover): random accesses on both Pcell and Scell end and fail;
The second definition (of the end of a handover): a random access on the Pcell ends, and a random access procedure on at least one Scell succeeds.

In an embodiment of the present invention, said handover method further comprises the step: if a random access of user equipment 3 on the Pcell fails, and a random access on at least one Scell succeeds, base station 2 determines whether to change the Pcell or not.

Furthermore, said handover method further comprises the step: if changing Pcell is determined, base station 2 sends a radio resource control layer signaling to user equipment 3 for indicating a new Pcell. In general, the new Pcell should be one of the Scells on which the random access is performed successfully. At the same time, base station 2 will configure dedicated resources related to the new Pcell, including physical uplink control channel (PUCCH), semi persistent schedule (SPS) resource etc. Optionally, configuration information of these resources is also contained in the radio resource control layer signaling for indicating the new Pcell.

Thus, the above solution allows the target base station to change the Pcell in the case that a random access fails to be performed on the Pcell, so as to increase the probability of a successful handover, and to avoid unnecessary connection reestablishment procedure.

In an embodiment of the present invention, the above handover method further comprises the step: when the random access on the Pcell is successful, user equipment 3 sends a handover complete command through the Pcell.

In an embodiment of the present invention, said handover method further comprises: when at least one random access on said Pcell and the Scell is successful, user equipment 3 sends a handover (HO) complete command through the Pcell or Scell on which the random access is successfully performed. Specifically, when the random access on the Pcell is successful, user equipment 3 preferably sends the handover complete command through the Pcell; when the random access on the Pcell fails, but the random access on at least one Scell is successful, user equipment 3 sends the handover complete command through the Scell on which the random access is successfully performed.

For a handover procedure in LTE-A R10, a failure of random access on the Pcell means a handover failure. However, in the technical solution proposed by the present invention, a handover failure can be defined by the following two definitions:
The first definition (of a handover failure:) both random accesses on the Pcell and the Scell fail;
The second definition (of a handover failure_: the random access on the Pcell fails, and the random access on at least one Scell succeeds, but base station determins not to change the Pcell.

In an embodiment of present invention, corresponding to the first definition of said handover failure, said handover method further comprises the step: when random accesses on both Pcell and Scell requiring a timing advance different from the Pcell that are indicated by the handover command fail, user equipment 3 initiates a reestablishment procedure of a radio resource control layer connection.

In another embodiment of the present invention, corresponding to the second definition of said handover failure, said handover method further comprises:
- When the random access on the Pcell indicated by the handover command fails, base station 2 determines not to change the Pcell, and sends a radio resource control layer signaling to user equipment 3 for indicating user equipment 3 to reestablish a radio resource control layer connection;
- User equipment 3 initiates the reestablishment procedure of the radio resource control layer connection after receiving the signaling for indicating the reestablishment of the radio resource control layer connection from base station 2.

The aforementioned two solutions for the two handover failures and the successive operations are also helpful to improve the success rate of handovers, so as to avoid unnecessary connection reestablishment procedures, as well as to enable the base station to keep the power to decide changing Pcell. The two solutions also cover non-contention based random access procedures. For example, if a preamble is indicated in a handover command, user equipment should firstly perform a non-contention based random access procedure.

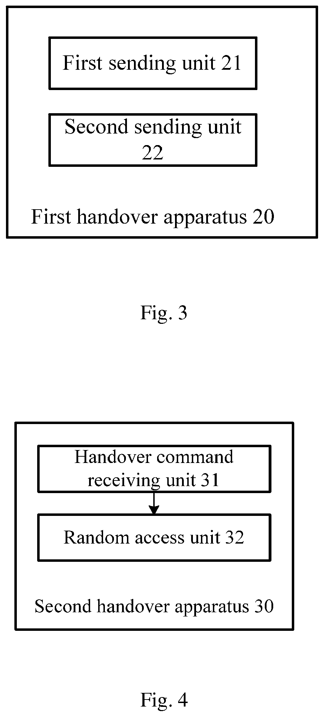

Fig. 3 illustrates a block diagram of a first handover apparatus for handover in base stations according to an embodiment of the present invention. As shown in the figure, first handover apparatus 20 in the embodiment comprises a first sending unit 21 and a second sending unit 22. First handover apparatus 20 is typically installed in a base station, such as in base station 2 shown in Fig. 1.

First sending unit 21 and second sending unit 22 are used to realize steps 11 and 15 of the aforementioned handover method, respectively.

First sending unit 21 is for sending a handover command to a user equipment, wherein said handover command includes information for indicating a Pcell and a Scell requiring a timing advance different from said Pcell;
Second sending unit 22 is for sending information for indicating the corresponding timing advance to said user equipment, according to a successful random access of the user equipment on said Pcell and the Scell requiring a timing advance different from said Pcell.

Fig. 4 illustrates a block diagram of a second handover apparatus for handover in a user equipment according to an embodiment of the present invention. As shown in the figure, second handover apparatus 30 in the embodiment comprises a handover command receiving unit 31 and a random access unit 32. Second handover apparatus 30 is typically installed in a user equipment, such as in user equipment 3 shown in Fig. 1.

Handover command receiving unit 31 corresponds to step 11 of the aforementioned handover method, and random access unit is used to realize step 13 of the aforementioned handover method.

Handover command receiving unit 31 is for receiving a handover command from a target base station, wherein said handover command includes information indicating a Pcell and a Scell requiring a timing advance different from said Pcell.

Random access unit 32 is for performing random accesses on said Pcell and Scell requiring a timing advance different from said Pcell.

In other embodiments of the present invention, said first handover apparatus 20 and second handover apparatus 30 further comprise corresponding unit for realizing the other steps in the aforementioned handover method.

Those skilled in the art should understand that, each unit in the present invention can be realized by a hardware module, or realized by a functional module in software, and also can be realized by a hardware module integrated with software functional modules.

Those skilled in the art should understand that, the above embodiments are only illustrative rather than restrictive. The different technical features in the different embodiments can be combined, so as to achieve beneficial effects. Based on the drawings, the descriptions and the claims, Those skilled in the art can understand and realize the other variants of the disclosed embodiments. In the claims, the term "comprising" does not exclude other unit or steps; the indefinite article "a/an" does not exclude plurality; terms "first", "second" are used to represent names other than any specific order. Any reference sign in the claims should not be understood as a restriction to the protection scope. The functions of multiple parts appearing in the claims can be realized by a single hardware or software module, and the function of a certain part can be also realized by multiple different hardware or software modules. Some technical features appearing in different dependent claims does not mean that these technical features cannot be combined to gain beneficial effects.

## Claims

1. A method of handover performed in a base station, comprising the following steps of:
a. sending a handover command (11) to a user equipment, said handover command including information for indicating a Pcell and a Scell and that said Scell requires a timing advance different from said Pcell;
b. sending information (15) for indicating a corresponding timing advance to said user equipment after successful random accesses (13) of said user equipment on said Pcell and the Scell requiring a timing advance different from said Pcell.
c. if the random access of said user equipment on said Pcell fails, and a random access on at least one Scell succeeds, determining whether to change the Pcell or not.

2. A method according to claim 1, **characterized by** further comprising:
- if it is determined to change the Pcell, sending a radio resource control layer signaling to said user equipment for indicating a new Pcell.

3. A method according to claim 1, wherein, further comprising:
- if it is determined not to change the Pcell, sending a radio resource control layer signaling to said user equipment for indicating said user equipment to reestablish a radio resource control layer connection.

4. A method of handover performed in a user equipment, comprising the following steps of:
A. receiving a handover command (11) from a target base station, said handover command including information for indicating a Pcell and a Scell and that said Scell requires a timing advance different from said Pcell;
B. performing random accesses (13) on said Pcell and the Scell requiring a timing advance different from said Pcell; and
when at least one random access on said Pcell and the Scell succeeds, sending a handover completion command through the Pcell or the Scell on which the random access succeeds.

5. A method according to claim 4, **characterized by** performing, in said step B, random accesses on said Pcell and the Scell requiring a timing advance different from said Pcell in parallel.

6. A method according to claim 4, **characterized by**, performing , in said step B, random accesses on said Pcell and the Scell requiring a timing advance different from said Pcell successively.

7. A method according to claim 4, **characterized by** further comprising:
when a random access on said Pcell succeeds, sending a handover completion command through said Pcell.

8. A method according to claim 4, **characterized by** further comprising:
when both random accesses on said Pcell and the Scell requiring a timing advance different from said Pcell fails, initiating a procedure of reestablishing a radio resource control layer connection.

9. A method according to claim 4, **characterized by** further comprising:
when receiving information for indicating a reestablishment of a radio resource control layer connection from said target base station, initiating the procedure of reestablishing the radio resource control layer connection.

10. A first handover apparatus (20) for handover in a base station, comprising:
a first sending unit (21), for sending a handover command to a user equipment (3), said handover command including information for indicating said Pcell and the Scell and that said Scell requires a timing advance different from said Pcell;
a second sending unit (22), for sending information for indicating a corresponding timing advance to said user equipment (3) after successful random accesses of said user equipment on said Pcell and the Scell requiring a timing advance different from said Pcell; and, if the random access of said user equipment on said Pcell fails, and a random access on at least one Scell succeeds, determining whether to change the Pcell or not.

11. A second handover apparatus (30) for handover in a user equipment (3), comprising:
a handover command receiving unit (31), for receiving a handover command from a target base station (2), said handover command including information for indicating the Pell and the Scell and that said Scell requires a timing advance different from said Pcell;
a random access unit (32), for performing random accesses on said Pcell and the Scell requiring a timing advance different from said Pcell; and, when at least one random access on said Pcell and the Scell succeeds, sending a handover completion command through the Pcell or the Scell on which the random access succeeds..

## Patentansprüche

1. Verfahren zur Weiterreichung, das in einer Basisstation ausgeführt wird, mit den folgenden Schritten:
a. Senden eines Weiterreichungsbefehls (11) zu einem Benutzergerät, wobei der Weiterreichungsbefehl Informationen zur Angabe einer Pcell und einer Scell umfasst, und dass die Scell einen von der Pcell verschiedenen Zeitsteuerungsvorlauf erfordert;
b. Senden von Informationen (15) zur Angabe eines entsprechenden Zeitsteuerungsvorlaufs für das Benutzergerät nach erfolgreichen Direktzugriffen (13) des Benutzergeräts auf der Pcell und der Scell, die einen von der Pcell verschiedenen Zeitsteuerungsvorlauf erfordert;
c. wenn der Direktzugriff des Benutzergeräts auf der Pcell fehlschlägt und ein Direktzugriff auf mindestens einer Scell Erfolg hat, Bestimmen, ob die Pcell zu ändern ist oder nicht.

2. Verfahren nach Anspruch 1, **dadurch gekennzeichnet, dass** es ferner Folgendes umfasst:
- wenn bestimmt wird, die Pcell zu ändern, Senden einer Funkressourcen-Steuerschichtsignalisierung zu dem Benutzergerät zur Angabe einer neuen Pcell.

3. Verfahren nach Anspruch 1, ferner umfassend:
- wenn bestimmt wird, die Pcell nicht zu ändern, Senden einer Funkressourcen-Steuerschichtsignalisierung zu dem Benutzergerät, um dem Benutzergerät anzugeben, eine Funkressourcen-Steuerschichtverbindung neu herzustellen.

4. Verfahren zur Weiterreichung, das in einem Benutzergerät ausgeführt wird, mit den folgenden Schritten:
A. Empfangen eines Weiterreichungsbefehls (11) von einer Zielbasisstation, wobei der Weiterreichungsbefehl Informationen zur Angabe einer Pcell und einer Scell umfasst, und dass die Scell einen von der Pcell verschiedenen Zeitsteuerungsvorlauf erfordert;
B. Durchführen von Direktzugriffen (13) auf der Pcell und der Scell, die einen von der Pcell verschiedenen Zeitsteuerungsvorlauf erfordert; und
wenn mindestens ein Direktzugriff auf der Pcell und der Scell Erfolg hat, Senden eines Weiterreichungs-Abschlussbefehls durch die Pcell oder die Scell, auf der der Direktzugriff Erfolg hat.

5. Verfahren nach Anspruch 4, **dadurch gekennzeichnet, dass** in Schritt B Direktzugriffe auf der Pcell und der Scell, die einen von der Pcell verschiedenen Zeitsteuerungsvorlauf erfordert, parallel durchgeführt werden.

6. Verfahren nach Anspruch 4, **dadurch gekennzeichnet, dass** in Schritt B Direktzugriffe auf der Pcell und der Scell, die einen von der Pcell verschiedenen Zeitsteuerungsvorlauf erfordert, sukzessiv durchgeführt werden.

7. Verfahren nach Anspruch 4, **dadurch gekennzeichnet, dass** es ferner Folgendes umfasst:
wenn ein Direktzugriff auf der Pcell Erfolg hat, Senden eines Weiterreichungs-Abschlussbefehls durch die Pcell.

8. Verfahren nach Anspruch 4, **dadurch gekennzeichnet, dass** es ferner Folgendes umfasst:
wenn beide Direktzugriffe auf der Pcell und der Scell, die einen von der Pcell verschiedenen Zeitsteuerungsvorlauf erfordert, fehlschlagen, Einleiten einer Prozedur des erneuten Herstellens einer Funkressourcen-Steuerschichtverbindung.

9. Verfahren nach Anspruch 4, **dadurch gekennzeichnet, dass** es ferner Folgendes umfasst:
wenn Informationen zur Angabe einer erneuten Herstellung einer Funkressourcen-Steuerschichtverbindung von der Zielbasisstation empfangen werden, Einleiten der Prozedur des erneuten Herstellens der Funkressourcen-Steuerungsschichtverbindung.

10. Erste Weiterreichungsvorrichtung (20) zur Weiterreichung in einer Basisstation, umfassend:
eine erste Sendeeinheit (21) zum Senden eines Weiterreichungsbefehls zu einem Benutzergerät (3), wobei der Weiterreichungsbefehl Informationen zur Angabe der Pcell und der Scell umfasst, und dass die Scell einen von der Pcell verschiedenen Zeitsteuerungsvorlauf erfordert;
eine zweite Sendeeinheit (22) zum Senden von Informationen zur Angabe eines entsprechenden Zeitsteuerungsvorlaufs für das Benutzergerät (3) nach erfolgreichen Direktzugriffen des Benutzergeräts auf der Pcell und der Scell, die einen von der Pcell verschiedenen Zeitsteuerungsvorlauf erfordert; und, wenn der Direktzugriff des Benutzergeräts auf der Pcell fehlschlägt und ein Direktzugriff auf mindestens einer Scell Erfolg hat, Bestimmen, ob die Pcell zu ändern ist oder nicht.

11. Zweite Weiterreichungsvorrichtung (30) zur Weiterreichung in einem Benutzergerät (3), umfassend:
eine Weiterreichungs-Befehlsempfangseinheit (31) zum Empfangen eines Weiterreichungsbefehls von einer Zielbasisstation (2), wobei der Weiterreichungsbefehl Informationen zur Angabe der Pcell und der Scell umfasst, und dass die Scell einen von der Pcell verschiedenen Zeitsteuerungsvorlauf erfordert;
eine Direktzugriffseinheit (32) zum Durchführen von Direktzugriffen auf der Pcell und der Scell, die einen von der Pcell verschiedenen Zeitsteuerungsvorlauf erfordert; und wenn mindestens ein Direktzugriff auf der Pcell und der Scell Erfolg hat, Senden eines Weiterreichungs-Abschlussbefehls durch die Pcell oder die Scell, auf der der Direktzugriff Erfolg hat.

## Revendications

1. Procédé de transfert intercellulaire effectué dans une station de base, comprenant les étapes suivantes :
a. l'envoi d'une commande de transfert intercellulaire (11) à un équipement d'utilisateur, ladite commande de transfert intercellulaire comprenant des informations permettant d'indiquer une cellule Pcell et une cellule Scell et que ladite cellule Scell nécessite une avance de synchronisation différente de ladite cellule Pcell ;
b. l'envoi d'informations pour indiquer une avance de synchronisation correspondante audit équipement d'utilisateur après des accès aléatoires réussis dudit équipement d'utilisateur sur ladite cellule Pcell et ladite cellule Scell nécessitant une avance de synchronisation différente de ladite cellule Pcell.
c. si l'accès aléatoire dudit équipement d'utilisateur sur ladite cellule Pcell échoue, et si un accès aléatoire sur au moins une cellule Scell réussit, la décision de changer la cellule Pcell ou non.

2. Procédé selon la revendication 1, **caractérisé en ce qu'**il comprend en outre :
- s'il est décidé de changer de cellule Pcell, l'envoi d'une couche de commande de ressource radioélectrique pour signaler audit équipement d'utilisateur l'indication d'une nouvelle cellule.

3. Procédé selon la revendication 1, comprenant en outre l'étape suivante :
- s'il est décidé de ne pas changer de cellule Pcell, l'envoi d'une couche de commande de ressource radioélectrique pour signaler audit équipement d'utilisateur que ledit équipement d'utilisateur doit rétablir une connexion de couche de commande de ressources radioélectriques.

4. Procédé de transfert intercellulaire effectué dans un équipement d'utilisateur, comprenant les étapes suivantes :
A. la réception d'une commande de transfert intercellulaire (11) en provenance d'une station de base de destination, ladite commande de transfert intercellulaire comprenant des informations permettant d'indiquer une cellule Pcell et une cellule Scell et ladite cellule Scell nécessitant une avance de synchronisation différente de ladite cellule Pcell ;
B. l'exécution d'accès aléatoires (13) sur ladite cellule Pcell et la cellule Scell nécessitant une avance de synchronisation différente de ladite cellule Pcell ; et
lorsqu'au moins un accès aléatoire sur ladite cellule Pcell et la cellule Scell réussit, envoi d'une commande d'achèvement du transfert intercellulaire par le biais de la cellule Pcell ou de la cellule Scell sur laquelle l'accès aléatoire aboutit.

5. Procédé selon la revendication 4, **caractérisé par** l'exécution, lors de ladite étape B, d'accès aléatoires sur ladite cellule Pcell et la cellule Scell nécessitant une avance de synchronisation différente de ladite cellule Pcell en parallèle.

6. Procédé selon la revendication 4, **caractérisé par** l'exécution, lors de ladite étape B, d'accès aléatoires sur ladite cellule Pcell et la cellule Scell nécessitant une avance de synchronisation différente de ladite cellule Pcell successivement.

7. Procédé selon la revendication 4, **caractérisé en ce qu'**il comprend en outre :
lorsqu'un accès aléatoire sur ladite cellule Pcell réussit, l'envoi d'une commande d'achèvement du transfert intercellulaire par l'intermédiaire de ladite cellule Pcell.

8. Procédé selon la revendication 4, **caractérisé en ce qu'**il comprend en outre :
lorsque les deux accès aléatoires sur ladite cellule Pcell et la cellule Scell nécessitant une avance de synchronisation différente de ladite cellule Pcell échouent, le lancement d'une procédure de rétablissement d'une connexion de couche de commande de ressources radioélectriques.

9. Procédé selon la revendication 4, **caractérisé en ce qu'**il comprend en outre :
lors de la réception d'informations destinées à indiquer le rétablissement d'une connexion de couche de commande de ressources radioélectriques depuis ladite station de base de destination, le lancement de la procédure de rétablissement de la connexion de couche de commande de ressources radioélectriques.

10. Premier appareil de transfert intercellulaire pour le transfert intercellulaire dans une station de base, comprenant :
une première unité d'envoi (21), pour envoyer une commande de transfert intercellulaire à un équipement d'utilisateur (3), ladite commande de transfert intercellulaire comprenant des informations pour indiquer ladite cellule Pcell et la cellule Scell et que ladite cellule Scell nécessite une avance de synchronisation différente de ladite cellule Pcell ;
une seconde unité d'envoi (22), pour envoyer des informations afin d'indiquer une avance de synchronisation correspondante audit équipement d'utilisateur (3) après des accès aléatoires réussis dudit équipement d'utilisateur sur ladite cellule Pcell et la cellule Scell nécessitant une avance de synchronisation différente de ladite cellule Pcell ; et, si l'accès aléatoire dudit équipement d'utilisateur sur ladite cellule Pcell échoue, et si un accès aléatoire sur au moins une cellule Scell réussit, pour décider de changer la cellule Pcell ou non.

11. Second appareil de transfert intercellulaire (30) pour un transfert intercellulaire dans un équipement d'utilisateur (3), comprenant :
une unité de réception de commande de transfert intercellulaire (31), destinée à recevoir une commande de transfert intercellulaire d'une station de base de destination (2), ladite commande de transfert intercellulaire comprenant des informations permettant d'indiquer la cellule Pcell et la cellule Scell et d'indiquer que ladite cellule Scell nécessite une avance de synchronisation différente de ladite cellule Pcell ;
une unité d'accès aléatoire (32) pour effectuer des accès aléatoires sur ladite cellule Pcell et la cellule Scell nécessitant une avance de synchronisation différente de ladite cellule Pcell ; et, quand au moins un accès aléatoire sur ladite cellule Pcell et la cellule Scell réussit, envoyer une commande d'achèvement du transfert intercellulaire par le biais de la cellule Pcell ou de la cellule Scell sur laquelle l'accès aléatoire aboutit.
